Europäisches Patentamt

European Patent Office

Office européen des brevets

(19)

(11) Numéro de publication: **0 197 819**
A1

(12) **DEMANDE DE BREVET EUROPEEN**

(21) Numéro de dépôt: **86400554.1**

(22) Date de dépôt: **14.03.86**

(51) Int. Cl.⁴: **B 32 B 27/10**
**B 32 B 5/18**

(30) Priorité: **15.03.85 FR 8503860**

(43) Date de publication de la demande:
**15.10.86 Bulletin 86/42**

(84) Etats contractants désignés:
**BE CH DE GB IT LI**

(71) Demandeur: **de Swarte, Grégory**
**9 bis avenue Pierre Grenier**
**F-92100 Boulogne(FR)**

(72) Inventeur: **de Swarte, Grégory**
**9 bis avenue Pierre Grenier**
**F-92100 Boulogne(FR)**

(74) Mandataire: **Rochery, Marc Henri**
**Société Internationale 19, rue de la Paix**
**F-75002 Paris(FR)**

(54) **Panneau composite de faible masse volumique et procédé de fabrication d'un tel panneau.**

(57) Panneau composite utilisant dans sa partie centrale un matériau léger comme par exemple le polystyrène expansé.

Selon l'invention, le matériau central est recouvert sur ses deux faces d'un stratifié composé d'une ou plusieurs couches de matériau en feuille imprégné d'un produit durcisseur, ce matériau en feuille étant de préférence un papier relativement fort et le durcisseur de la résine phénolique.

EP 0 197 819 A1

Croydon Printing Company Ltd

L'invention concerne un panneau composite de faible masse volumique équivalente, à usage multiple, incorporant notamment le polystyrène expansé ou un matériau équivalent; l'invention concerne aussi un procédé de fabrication d'un tel panneau.

Il est connu de réaliser un panneau en associant un matériau synthétique mousse, et notamment le polystyrène expansé, avec un autre matériau plus dense et plus rigide, comme par exemple le plâtre ou le bois. Les panneaux ainsi constitués présentent tous leurs avantages et leurs inconvénients et sont utilisés avec plus ou moins de discernement dans de nombreux domaines industriels et notamment le bâtiment et les travaux publics. Pour la plupart des matériaux connus, la masse volumique équivalente et les caractéristiques mécaniques dépendent, pour l'essentiel, de la nature du second matériau utilisé en combinaison avec le polystyrène expansé. L'invention est le fruit de recherches et essais de compatibilité des colles et matériaux susceptibles d'être associés à une mousse synthétique comme le polystyrène expansé.

Dans cet esprit, l'invention concerne donc un panneau composite de faible masse volumique équivalente, caractérisé en ce qu'il se compose essentiellement d'une plaque de matériau synthétique mousse, comme par exemple du polystyrène expansé, sur les deux faces de laquelle est collé un stratifié composé d'une ou plusieurs couches de matériau en feuille, imprégné d'un produit durcisseur.

Le fait de coller le stratifié, aussi mince soit-il, des deux côtés de la plaque de polystyrène expansé, confère à l'ensemble une très grande solidité, d'une légèreté extrême. En effet, ni le polystyrène expansé ni le stratifié utilisé, qui sera décrit plus en détail ci-dessous, ne sont utilisables séparément en panneaux porteurs. En effet, le matériau en feuille précité est, de préférence, un papier relativement fort (un papier convenant pour cette application est par exemple connu du public sous le nom de "papier kraft") et les différentes couches de ce papier sont imprégnées de résine phénolique. Ce type de stratifié peut être collé au polystyrène expansé et on a constaté que certaine colles à deux constituants étaient préférables, comme par exemple une colle à base de résorcyne ou d'urée-formol.

L'aspect esthétique du panneau ainsi constitué peut être amélioré en recouvrant au moins l'une de ses faces d'une feuille de papier décoratif imprégné d'une résine mélaminique ou analogue.

2

L'invention concerne également un procédé de fabrication d'un tel panneau composite, caractérisé en ce qu'il consiste à coller un stratifié, notamment du type décrit ci-dessus, de chaque côté d'une plaque de matériau synthétique mousse, comme par exemple du polystyrène expansé, à partir d'une colle à base de résorcyne ou d'urée-formol, à température moyenne et sous pression.

Autrement dit, la mise en oeuvre du procédé de fabrication est extrêmement simple, puisqu'elle consiste à présenter deux plaques dudit stratifié de part et d'autre d'une plaque de polystyrène expansé, après avoir répandu la colle et à chauffer l'ensemble sous pression. Les meilleurs résultats d'assemblage ont été observés pour une température comprise entre 60 et 150° et, de préférence, voisine de 80°. La pression peut quant à elle être comprise entre 60 et 120 kg/cm² ; elle sera de préférence voisine de 90 kg/cm². Le stratifié est élaboré préalablement comme indiqué ci-dessus, c'est-à-dire à partir de plusieurs couches de papier relativement fort imprégné de résine phénolique. En outre, on ajoute dans la colle urée-formol une poudre ignifuge, par exemple la poudre commercialisée sous le nom de "Poudre VETO", à raison de 30 % de poudre pour 70% de colle. Cette dernière garde ses propriétés et sa viscosité n'est pas modifiée.

Le matériau composite qui vient d'être décrit convient pour de multiples applications. On citera en particulier le cloisonnement dans le domaine de la construction provisoire, comme par exemple les expositions. Son usage pour la réalisation de faux plafonds est également recommandé. Il peut convenir pour la construction de meubles et de tous supports pour la décoration ou l'affichage. Sa masse volumique équivalente est extrêmement faible, de l'ordre de 2,5 à 3 kg/m². Sa résistance à la pression et aux chocs est excellente; il convient pour des usages en extérieur. En outre, il présente de bonnes qualités d'isolation acoustique et thermique.

Le procédé qui vient d'être décrit ne se limite pas à la fabrication de panneaux plats. On peut parfaitement donner une forme voulue au stratifié, au moment de l'imprégnation par la résine phénolique et utiliser ce stratifié de part et d'autre d'une pièce de polystyrène expansé présentant des surfaces équivalentes.

REVENDICATIONS                              **0197819**

1. Panneau composite de faible masse volumique équivalente, caractérisé en ce qu'il se compose essentiellement d'une plaque de matériau synthétique mousse, comme par exemple du polystyrène expansé, sur les deux faces de laquelle est collé un stratifié composé d'une ou plusieurs couches de matériau en feuille imprégné d'un produit durcisseur.

2. Panneau selon la revendication 1, caractérisé en ce que ledit matériau en feuille est un papier relativement fort.

3. Panneau selon la revendication 2, caractérisé en ce que ledit papier est imprégné de résine phénolique.

4. Panneau selon l'une des revendications 1 à 3, caractérisé en ce que le stratifié utilisé est collé au moyen d'une colle à base de résorcyne ou d'urée-formol.

5. Panneau selon l'une des revendications précédentes, caractérisé en ce que l'une de ses faces au moins est recouverte d'une feuille de papier décoratif imprégnée d'une résine mélaminique ou analogue.

6. Procédé de fabrication d'un panneau composite de faible masse volumique équivalente, caractérisé en ce qu'il consiste à coller un stratifié de chaque côté d'une plaque de matériau synthétique mousse, tel que par exemple du polystyrène expansé, à partir d'une colle à base de résorcyne ou d'urée-formol, à température moyenne et sous pression.

7. Procédé selon la revendication 6, caractérisé en ce que la température est comprise entre 60 et 150°, de préférence voisine de 80°.

8. Procédé selon l'une des revendications 6 ou 7, caractérisé en ce que la pression est comprise entre 60 et 120° kg/cm², de préférence voisine de 90 kg/cm².

9. Procédé selon l'une des revendications 6 à 8, caractérisé en ce qu'il consiste à élaborer préalablement le stratifié à partir de plusieurs couches de papier relativement fort, en imprégnant ce papier de résine phénolique.

## DOCUMENTS CONSIDERES COMME PERTINENTS

| Catégorie | Citation du document avec indication, en cas de besoin des parties pertinentes | Revendication concernée | CLASSEMENT DE LA DEMANDE (Int Cl 4) |
|---|---|---|---|
| X | FR-A-1 313 980 (FORMICA) * Colonne de gauche, lignes 1-21; exemple 1; figure 1; résumé * | 1-5 | B 32 B 27/10 B 32 B 5/18 |
| A | | 9 | |
| A | FR-A-2 458 391 (BPB INDUSTRIES LTD.) * Page 3, lignes 26-30; page 4, lignes 25-32; page 10, procédé 1; figures * | 1,6 | |

--- 

-----

DOMAINES TECHNIQUES RECHERCHES (Int Cl 4)

B 32 B

Le present rapport de recherche a été etabli pour toutes les revendications

| Lieu de la recherche | Date d'achèvement de la recherche | Examinateur |
|---|---|---|
| LA HAYE | 16-06-1986 | VAN THIELEN J.B. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82